# FASCICULE DE BREVET EUROPEEN

(11) **EP 0 660 013 B1**
(45) Date de publication et mention de la délivrance du brevet: **20.05.1998**
(21) Numéro de dépôt: 94402829.9
(22) Date de dépôt: 08.12.1994
(51) Int. Cl.: F16H 57/02

(54) **Dispositif d'entraînement en rotation d'une couronne dentée de grand diamètre**
Drehantrieb für ein Zahnrad mit grossem Durchmesser
Rotary drive system for large diameter ring gear

(30) Priorité: 20.12.1993 FR 9315312
(43) Date de publication de la demande: 28.06.1995
(73) Titulaire: COMPAGNIE ENGRENAGES ET REDUCTEURS MESSIAN-DURAND, F-59400 Cambrai (FR)
(72) Inventeur: Liszczynski, Claude, F-58600 Fourchambault (FR)
(74) Mandataire: Lanceplaine, Jean-Claude

(56) Documents cités:
- DE-A- 2 938 258
- FR-E- 94 668
- GB-A- 1 001 735
- GB-A- 1 237 161
- US-A- 3 315 543

## Description

La présente invention a pour objet un dispositif d'entraînement en rotation d'une couronne dentée de grand diamètre destinée à entraîner par exemple un arbre ou un tube sous charge.

Dans différents secteurs industriels, comme par exemple les sucreries, les cimenteries, la sidérurgie, les industries agro-alimentaires ou toute autre industrie, les procédés de fabrication nécessitent l'entraînement en rotation d'arbres ou de tubes de grande longueur.

Généralement, l'entraînement se fait par une couronne dentée ou une roue dentée de grand diamètre montée sur l'arbre ou le tube à entraîner.

Compte tenu de la transmission d'efforts importants, l'entraînement de la couronne dentée ou de la roue dentée est réalisé par plusieurs pignons moteurs divisant ainsi la puissance de la machine motrice sur plusieurs flux d'efforts qui se regroupent sur l'organe de sortie de la chaîne cinématique.

Jusqu'à présent les transmissions se limitent en général à deux pignons moteurs engrènant avec la même couronne dentée, voire à trois pignons pour les mécanismes planétaires.

Le positionnement des pignons moteurs sur la couronne dentée et les implantations au sol des carters contenant ces pignons moteurs doivent être précis et occupent un emplacement relativement important dans l'environnement de la machine à entraîner.

D'autre part, au cours du procédé de fabrication ou encore en raison du vieillissement des différents organes composant la machine, les mouvements de l'arbre ou du tube à entraîner, suivant les trois directions d'axes, peuvent atteindre plusieurs centimètres et sont inhérents, par exemple, aux flexibilités et déformations des organes de grandes dimensions ou aux variations des efforts ainsi qu'aux phénomènes de dilatations dus aux effets thermiques.

Par ailleurs, l'effort d'entraînement entre les pignons moteurs et la couronne dentée se décompose en un effort tangentiel produisant le couple d'entraînement et en un effort radial qui tend à séparer les pignons moteurs de la couronne dentée.

Dans les transmissions traditionnelles, la reprise des efforts se fait par l'intermédiaire d'un carter dont l'embase fixée au sol est encombrante.

Les mouvements parasites de la machine à entraîner occasionnés pour les raisons mentionnées ci-dessus, provoquent une localisation des charges sur les dentures des pignons moteurs et de la couronne dentée, et de ce fait des pressions élevées qui peuvent conduire à des avaries sur les flancs de ces dentures.

On connaît dans le brevet GB-A-1 001 735 un dispositif d'entraînement en rotation d'une couronne dentée montée sur un arbre ou un tube, du type comprenant plusieurs pignons moteurs destinés à entraîner la couronne dentée et reliés à des moyens d'entraînement en rotation. Chaque pignon moteur est monté dans un carter comportant au moins deux galets concentriques au pignon moteur et destinés à rouler sur deux pistes extérieures, latérales à ladite couronne dentée. Les pignons moteurs sont répartis en un groupe ou en plusieurs groupes de deux pignons moteurs et ledit groupe ou chaque groupe forme une chaîne cinématique dont les deux carters sont reliés entre eux par un organe de liaison déformable. Un carter d'extrémité de deux carters est relié à un point fixe d'un châssis fixe par une barre de liaison et l'autre carter d'extrémité des deux carters est relié à un autre point fixe dudit châssis fixe par un moyen de liaison.

L'invention a pour but de fournir un dispositif d'entraînement en rotation d'une couronne dentée de grand diamètre, compacte, fonctionnant dans les deux sens de rotation ou dans les deux sens de couple et permettant une grande réduction de la vitesse avec la transmission d'un couple élevé, tout en éliminant les implantations des carters au sol ou en les réduisant à de simples points d'ancrage ce qui permet de libérer l'environnement immédiat de la machine à entraîner mis à disposition pour l'utilisateur et apportant de ce fait une simplification des montages, des réglages et de la mise en oeuvre des implantations du dispositif d'entraînement sur les structures fixes de l'installation.

L'invention a donc pour objet un dispositif d'entraînement en rotation d'une couronne dentée de grand diamètre montée sur un arbre ou un tube, du type comprenant :
- plusieurs pignons moteurs destinés à entraîner la couronne dentée répartis autour de ladite couronne dentée et reliés à des moyens d'entraînement en rotation,
- chaque pignon moteur est monté dans un carter comportant au moins deux galets concentriques au pignon moteur et destinés à rouler sur deux pistes extérieures, latérales à ladite couronne dentée,
- les pignons moteurs sont répartis en un groupe ou en plusieurs groupes de deux pignons moteurs,
- ledit groupe ou chaque groupe desdits plusieurs groupes forme une chaîne cinématique dont les deux carters sont reliés entre eux par un organe de liaison déformable, et dont un carter d'extrémité des deux carters est relié à un point fixe d'un châssis fixe par une barre de liaison, et l'autre carter d'extrémité des deux carters est relié à un autre point fixe dudit châssis fixe par un moyen de liaison , caractérisé en ce que ledit autre carter d'extrémité des deux carters est relié audit autre point fixe dudit châssis fixe par une barre de liaison, et ledit organe ou lesdits organes de liaison déformable et les barres de liaison dudit groupe ou de chaque groupe sont reliés aux carters des pignons moteurs et aux points fixes dudit châssis fixe correspondant par des liaisons articulées assurant un auto-alignement des axes des pignons moteurs avec l'axe de la couronne dentée selon les trois directions d'axe (X, Y, Z).

Selon d'autres caractéristiques de l'invention :
- les liaisons articulées entre les barres de liaison et les châssis fixes sont formées chacune par une articulation à au moins trois degrés de liberté,
- les liaisons articulées entre les organes de liaison déformable et les carters des pignons moteurs sont formées chacune par une articulation à au moins trois degrés de liberté,
- chaque articulation à un degré de liberté est formée par une articulation de type rotoïde,
- chaque organe de liaison déformable comprend un tirant formé de deux parties, une extrémité de la première partie étant reliée par une liaison articulée à un premier carter d'extrémité d'un groupe de pignons moteurs et une extrémité de la seconde partie étant reliée par une liaison articulée à un second carter d'extrémité du même groupe de pignons moteurs, les extrémités en vis à vis des deux parties du tirant étant reliées entres elles par un élément élastique exerçant sur lesdits carters deux forces de direction opposée et colinéaires pour provoquer le pivotement desdits carters en direction de l'axe de la couronne dentée,
- l'élément élastique est formé par un manchon disposé autour de la première partie du tirant et comprenant un empilement de rondelles élastiques, comprimées et dont une paroi d'extrémité est en appui sur un épaulement ménagé sur l'extrémité de la première partie du tirant opposée à celle reliée à un premier carter d'extrémité du groupe de pignons moteurs et dont l'autre paroi d'extrémité est en appui sur une première extrémité d'une enveloppe concentrique audit manchon et montée coulissante sur la première partie du tirant, la seconde extrémité de ladite enveloppe étant reliée à la seconde partie du tirant,
- l'élément élastique est formé par au moins un ressort ou un vérin hydraulique,
- l'entraxe entre les liaisons articulées des carters d'extrémité d'un même groupe de pignons moteurs est réglable,
- chaque barre de liaison est formée par une barre rigide ou déformable,
- chaque barre de liaison est formée par un organe hydraulique ou amortisseur réglable ou non,
- les châssis fixes reliés par les barres de liaison à un carter d'extrémité de chaque groupe de pignons moteurs sont formés par un bâti de support de l'arbre ou du tube entraîné par la couronne dentée,
- les châssis fixes reliés par les barres de liaison à un carter d'extrémité de chaque groupe de pignons moteurs sont formés par un bâti fixe indépendant,
- au moins un groupe comporte un pignon moteur dont le carter est relié par l'organe de liaison déformable à un palier fixe au moyen d'une articulation à au moins trois degrés de liberté.

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique en élévation du dispositif d'entraînement selon l'invention,
- la Fig. 2 est une vue partiellement en coupe et à plus grande échelle d'un groupe de pignons moteurs du dispositif d'entraînement selon l'invention,
- la Fig. 3 est une vue partiellement en coupe et à plus grande échelle d'un organe de liaison déformable d'un groupe de pignons moteurs,
- la Fig. 4 est une vue de dessus schématique montrant le montage d'un pignon moteur,
- la Fig. 5 est une vue de dessus schématique d'un exemple de réalisation de montage des moyens d'entraînement en rotation d'un pignon moteur,
- la Fig. 6 est une vue schématique en élévation d'une première variante du dispositif d'entraînement selon l'invention,
- la Fig. 7 est une vue schématique en élévation d'une deuxième variante du dispositif d'entraînement selon l'invention,
- la Fig. 8 représente plusieurs schémas montrant les déformations de l'arbre à entraîner et les degrés de liberté du dispositif d'entraînement selon l'invention,
- la Fig. 9 est une vue partiellement en coupe et à plus grande échelle d'une variante d'un groupe de pignons moteurs du dispositif d'entrainement selon l'invention.

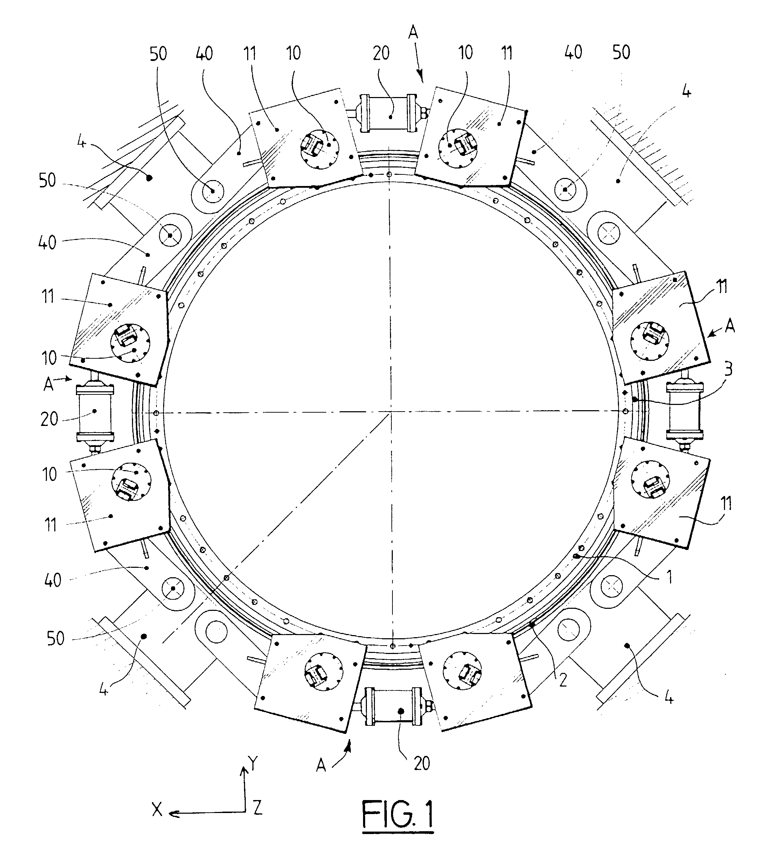

Sur la Fig. 1, on a représenté schématiquement un dispositif d'entraînement en rotation d'une couronne dentée 1 de grand diamètre. Ce type de couronne est destiné à entraîner en rotation, par exemple un arbre ou un tube sous charge, non représenté, pour l'industrie sucrière, ou la sidérurgie, ou les cimenteries ou les industries agro-alimentaires ou toute autre industrie.

La couronne dentée 1 comporte à sa périphérie une denture 2 et deux pistes de roulement 3 latérales et disposées chacune, de part et d'autre de la denture 2.

Le dispositif d'entraînement en rotation de la couronne dentée 1 comprend plusieurs pignons moteurs 10 répartis autour de la couronne dentée 1 et reliés à des moyens d'entraînement en rotation non représentés sur la Fig. 1.

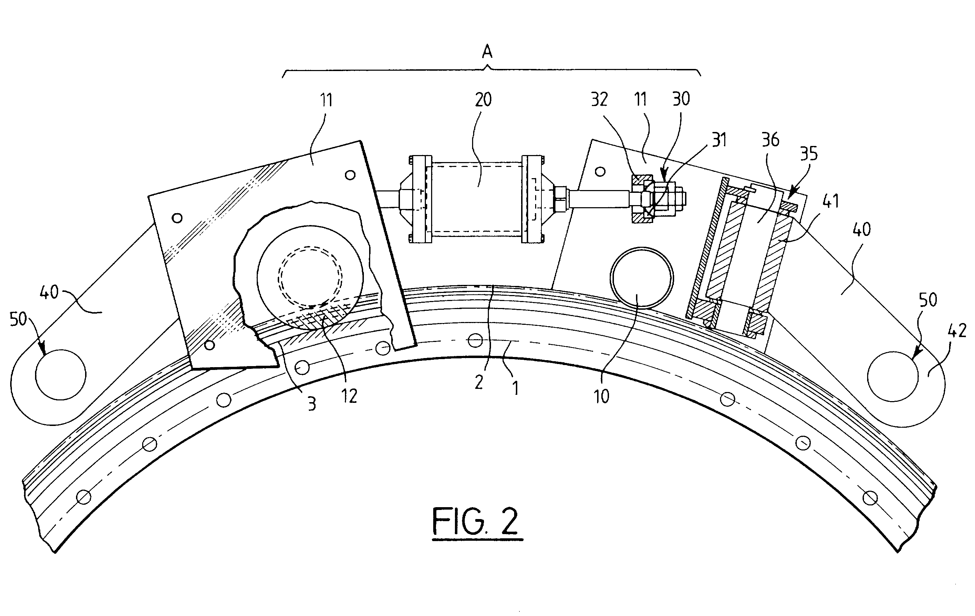

Ainsi que représenté sur les Figs. 1 et 2, chaque pignon moteur 10 est monté dans un carter 11 comportant deux galets 12 (Fig. 2) concentriques au pignon moteur 10 et destinés à rouler sur les pistes 3 de la couronne dentée 1.

Dans l'exemple de réalisation représenté sur les Figs. 1 et 2, le dispositif comprend quatre groupes A de deux pignons moteurs 10, c'est à dire huit pignons moteurs 10 au total, qui engrènent simultanément sur la couronne dentée 1.

Le nombre de pignons moteurs 10 par groupe ainsi que le nombre de groupes de pignons moteurs 10 est donné ici à titre d'exemple et dépendent du diamètre de la couronne dentée 1.

Le positionnement d'un pignon moteur 10 avec la couronne 1 est donné par les deux galets 12 concentriques qui s'appuient sur les deux pistes 3 de la couronne dentée 1.

Les carters 11 de chaque groupe A de pignons moteurs 10 sont reliés entre eux par un organe de liaison déformable désigné dans son ensemble par la référence 20.

Chaque groupe A de pignons moteurs 10 forme une chaîne cinématique reliée par les carters d'extrémité 11 à un châssis fixe 4 au moyen d'une barre de liaison 40.

Chaque extrémité des organes de liaison déformable 20 d'un groupe A de pignons moteurs 10 est reliée au carter 11 de ces pignons moteurs 10 par des liaisons articulées 30.

Chaque barre de liaison 40 est reliée, d'une part, à un carter 11 d'extrémité d'un groupe A de pignons moteurs 10 par une liaison articulée 35 et, d'autre part, au châssis fixe 4 par une liaison articulée 50.

Les efforts d'engrènement entre la couronne dentée 1 et les pignons moteurs 10 sont repris, d'une part, par les barres de liaison 40 et, d'autre part, par les organes de liaison déformable 20.

Les liaisons articulées 30 entre les organes de liaison déformable 20 et les carters 11 des pignons moteurs 10 sont formées chacune par une articulation à au moins trois degrés de liberté.

Les liaisons articulées 50 entre les barres de liaison 40 et les châssis fixes 4 sont formées chacune par une articulation à au moins trois degrés de liberté.

Les articulations 30 et 50 à au moins trois degrés de liberté sont formées par exemple par une articulation sphérique, comme représentée à la Fig. 2 ou par exemple par un cardan.

Les liaisons articulées 35 entre les barres de liaison 40 et les carters d'extrémité 11 de chaque groupe A de pignons moteurs 10 sont formées chacune par une articulation à un degré de liberté.

Les articulations 30 à trois degrés de liberté comportent une rotule 31 montée sur l'extrémité de l'organe de liaison déformable 20 et en appui sur un palier 32 fixé sur le carter 11 correspondant.

Chaque articulation 35 à un degré de liberté est formée par exemple par une articulation de type rotoïde, comme représenté à la Fig. 2 et comportant un axe 36.

L'extrémité 41 de chaque barre de liaison 40 opposée à celle 42 articulée sur le châssis fixe 4 est montée libre en rotation sur cet axe 36 et les extrémités dudit axe 36 sont montées fixes en rotation dans le carter 11 correspondant.

Les degrés de liberté des carters 11 ainsi réalisés par les articulations 30, 35 et 50 permettent à chaque pignon moteur 10 de suivre la couronne dentée 1 dans ses mouvements parasites au cours du fonctionnement, suivant les trois directions d'axe X, Y, Z.

Ainsi, on obtient un auto-alignement de la denture de chaque pignon moteur 10 avec celle de la couronne dentée 1 répartissant les pressions de contact sur toute la largeur de ces dentures et éliminant les inconvénients des mouvements parasites pouvant conduire à des avaries sur les flancs de ces dentures.

Par ailleurs, les liaisons articulées 30 de chaque organe de liaison déformable 20 sont judicieusement placées par rapport à la ligne d'entraxe afin de permettre l'auto-alignement des pignons moteurs 10 sans effets parasites.

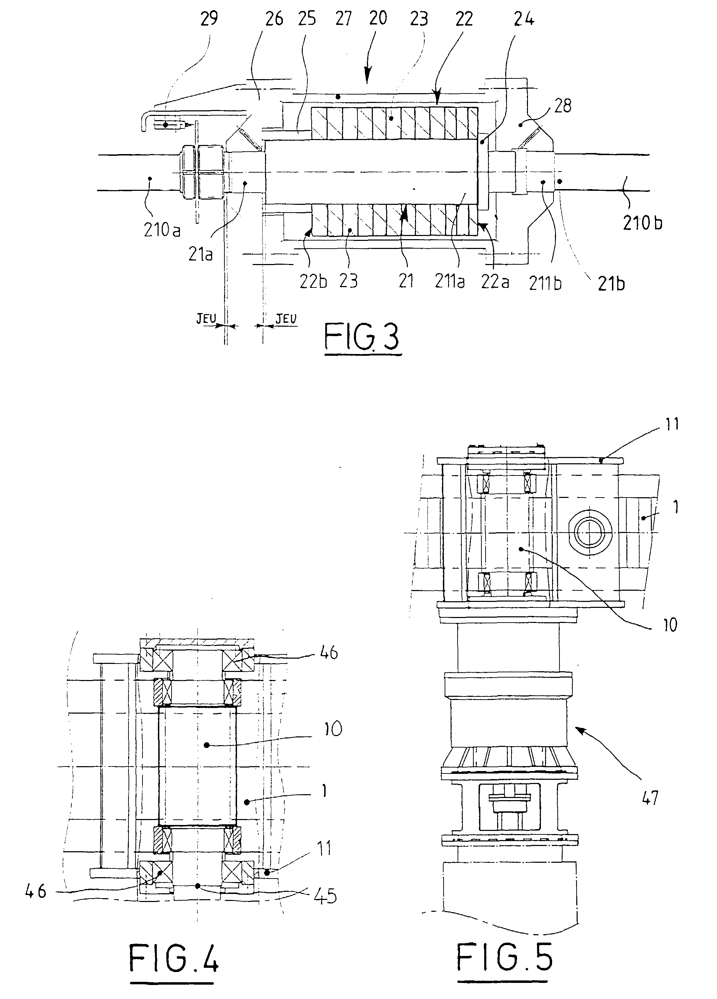

Ainsi que représenté à la Fig. 3, chaque organe de liaison déformable 20 comprend un tirant 21 formé de deux parties, respectivement 21a et 21b.

Une extrémité 210a de la première partie 21a est reliée par la liaison articulée 30 à un premier carter d'extrémité 11 d'un groupe A de pignons moteurs 10 et une extrémité 210b de la seconde partie 21b est reliée par la liaison articulée 30 à un second carter d'extrémité 11 du même groupe A de pignons moteurs 10.

Les extrémités 211a et 211b en vis à vis des deux parties 21a et 21b du tirant 21 sont reliées entres elles par un élément élastique 22 qui exerce sur les carters 11 reliés par ledit tirant 21 deux forces de direction opposée et colinéaires pour provoquer le pivotement desdits carters 11 en direction de l'axe de la couronne dentée 1.

Dans l'exemple de réalisation représenté à la Fig. 3, l'élément élastique 22 est formé par un manchon disposé autour de la première partie 21a du tirant 21 et comprenant un empilement de rondelles élastiques 23.

Une paroi d'extrémité 22a est en appui sur un épaulement 24 ménagé sur l'extrémité 211a de la première partie 21a du tirant 21, opposée à celle 210a reliée à l'un des carters d'extrémité 11 d'un groupe A de pignons moteurs 10.

L'autre paroi d'extrémité 22b du manchon 22 est en appui sur une bague 25 montée coulissante sur la première partie 21a du tirant 21.

L'extrémité de la bague 25 opposée à celle en appui sur la paroi d'extrémité 22b du manchon 22, est en appui sur un flasque 26 prévu sur un bord d'une enveloppe 27 concentrique au manchon 22 et montée coulissante sur la première partie 21a du tirant 21.

Un flasque 28 est monté sur le bord de l'enveloppe 27 opposé à celui sur lequel est monté le flasque 26 et ce flasque 28 est relié à l'extrémité 211b de la seconde partie 21b du tirant 21.

Un jeu est prévu entre les extrémités 211a et 211b des deux parties 21a et 21b du tirant 21.

Les rondelles élastiques 23 du manchon 22 sont comprimées entre l'épaulement 24 et la bague 25 et exercent un effort de precontrainte sur les parties 21a et 21b du tirant 21.

Cet effort de précontrainte a pour effet d'exercer sur les deux liaisons articulées 30, deux forces de direction opposée et colinéaires à l'axe de l'organe de liaison déformable 20.

Les forces ainsi appliquées sur les liaisons articulées 30 provoquent le pivotement des carters 11 autour des liaisons articulées 50 en direction de la couronne dentée 1 jusqu'à obtenir le contact des galets 12 sur les pistes extérieures 3 de la couronne dentée 1, réalisant ainsi l'entraxe de fonctionnement pignon moteur 10 - couronne dentée 1.

La valeur choisie de la pression de contact des galets 12 sur les pistes extérieures 3 de la couronne dentée 1 élimine les effets dynamiques perturbateurs, en particulier lors des faibles couples d'entraînement ou encore lors des phases transitoires de fonctionnement comme par exemple à l'accélération et à la décélération des masses.

L'élément élastique 22 peut être formé par exemple au moins par un ressort ou encore par un vérin hydraulique.

Par ailleurs, la conception de l'organe de liaison déformable 20 offre la possibilité d'une augmentation ou d'une réduction de l'entraxe entre les deux liaisons articulées 30 permettant ainsi d'absorber et d'admettre les mouvements radiaux, les faux ronds, le voile et les excentrations de la couronne dentée 1, souvent inévitables lors du fonctionnement de l'installation.

Cette variation de l'entraxe entre les liaisons articulées 30 est également mise à profit pour assurer la sécurité de la transmission en cas de surcharge et lors de conditions d'exploitation anormales.

Ces conditions d'exploitation anormales peuvent être détectées par un contacteur électrique 29 (Fig. 3) qui provoque l'arrêt de l'installation.

Chaque barre de liaison 40 peut être rigide ou déformable ou constituée par un organe hydraulique ou amortisseur réglable ou non.

Comme cela est représenté à la Fig. 4, chaque pignon moteur 10 d'axe 45 qui est guidé dans le carter 11 correspondant par des roulements 46 à grande rigidité radiale éliminant ainsi les efforts radiaux parasites sur les paliers des moyens d'entraînement en rotation du pignon moteur 10 correspondant.

Ces moyens d'entraînement de chaque pignon moteur 10 sont constitués par des réducteurs primaires 47 (Fig. 5) de conception à axes coaxiaux planétaires ou à axes parallèles ou encore à axes orthogonaux tels que des transmissions à vis ou cylindro coniques.

Les réducteurs primaires 47 sont fixés sur le carter 11 correspondant par boulonnage ou encore montés flottant en bascule sur l'axe d'entrée du pignon moteur 10, le moment du couple étant repris par un système de réaction directement relié à ce carter 11.

Le moteur de chaque réducteur primaire 47 est flasqué directement sur le réducteur primaire ou relié par l'intermédiaire d'un organe d'accouplement, non représenté, articulé ou non.

Dans le cas où la roue dentée 1 et les pignons moteurs 10 fonctionnent en position verticale, une suspension ou un support rigide ou réglable, non représenté, combiné avec les écarts de largeur de denture pignon-couronne et situé au centre de gravité des masses suspendues évitent toutes surcharges axiales et radiales parasites sur les différents éléments de la transmission.

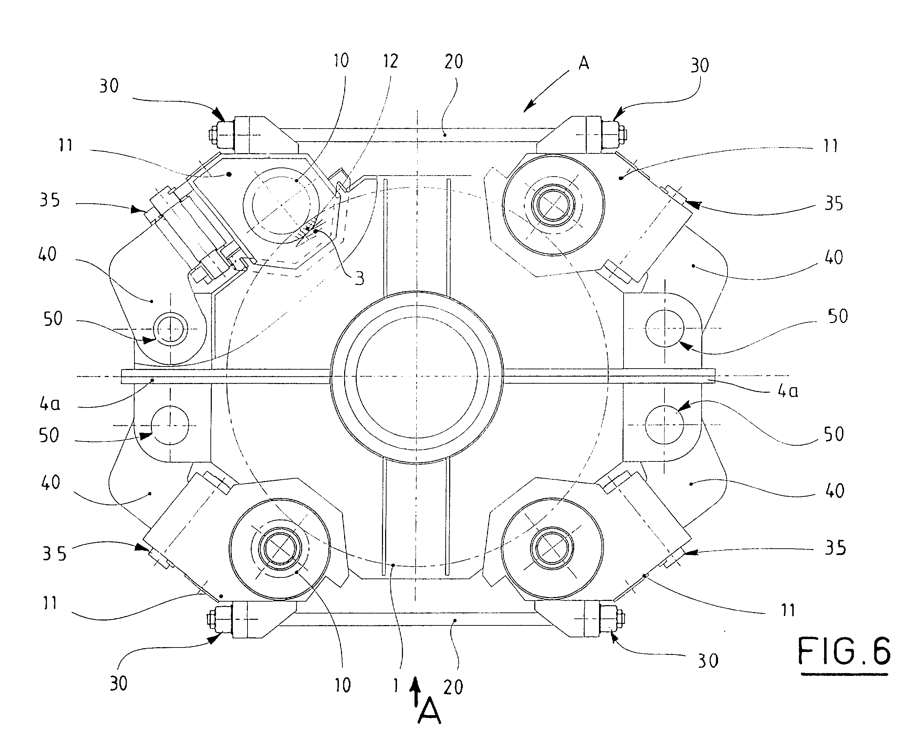

Selon une première variante représentée à la Fig. 6, le dispositif d'entraînement comprend deux groupes A de deux pignons moteurs 10.

Dans ce cas, les châssis fixes 4 reliés par les barres de liaison 40 à un carter d'extrémité 11 de chaque groupe A sont formés par un bâti 4a dans lequel les liaisons articulées 50 sont intégrées.

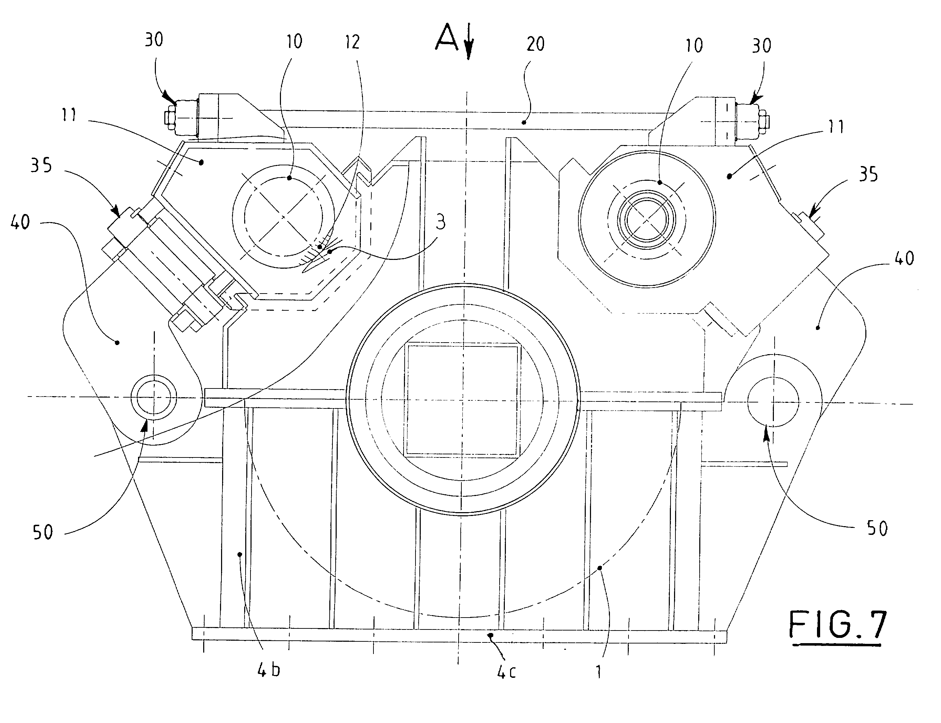

Selon une seconde variante représentée à la Fig. 7, le dispositif d'entraînement comprend un groupe A de deux pignons moteurs 10 qui entraînent simultanément la roue dentée 1.

Dans ce cas également, les liaisons articulées 50 sont intégrées dans un même bâti 4b de conception traditionnelle et qui comporte une embase 4c pour la liaison au sol.

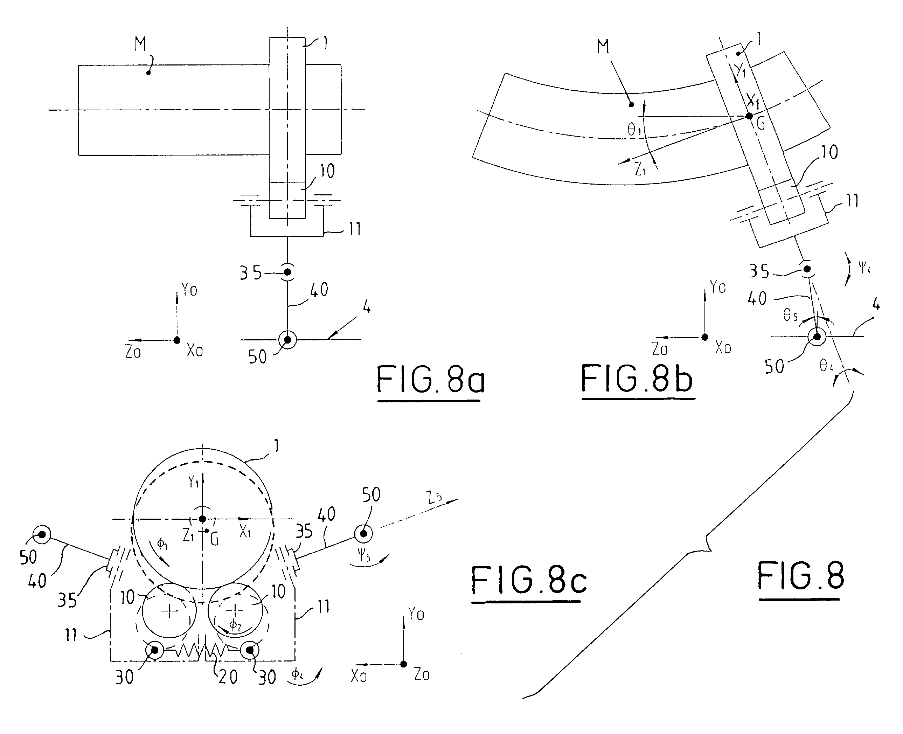

Les schémas de la Fig. 8 définissent les déformations et la position réelle d'une machine à entraîner M constituée par exemple par un arbre ou un tube, ainsi que les degrés de liberté des différents éléments destinés à entraîner cette machine.

Le schéma 8a montre la machine M entraînée dans sa position théorique parfaite qui est repérée dans le référentiel X₀, Y₀, Z₀. En pratique, la machine M entraînée se déforme et se déplace par rapport à ce même référentiel, comme représenté sur les schémas 8b et 8c.

Ainsi, la couronne dentée 1 se déplace également et un point quelconque de sa denture prend une position quelconque située dans le référentiel par les cinq paramètres : X₁, Y₁, Z₁, déplacement du centre de gravité G, θ₁ angle de déformation de l'axe de la machine M (rotation d'axe X₀) et φ₁ rotation propre de la couronne dentée 1 d'axe Z₁.

Chaque barre de liaison 40 reliant un carter 11 à un châssis fixe 4 est articulée à ses deux extrémités suivant :
- l'articulation 50 qui donne trois degrés de liberté, θ₅ rotation d'axe X₀ compensant le déplacement axial de la couronne dentée suivant l'axe Z₀, Ψ₅ rotation d'axe Z₀ compensant les déplacements radiaux de la couronne dentée 1 comme le montre le schéma 8c et θ₄ rotation d'axe situé sur la ligne d'entraxe de la couronne dentée 1 et du pignon motorisé 10, autorisée elle-même par la rotation d'axe Z₅ de la liaison articulée 50. Cette rotation apporte un auto-alignement de la denture du pignon moteur 10 correspondant avec la denture de la couronne dentée 1.
- L'articulation 35 qui donne un degré de liberté Ψ₄ rotation d'axe situé dans le plan X₁ Y₁ qui compense la déformation angulaire θ₁ de la machine M entraînée (schéma 8b).

Chaque organe de liaison déformable 20 reliant les deux carters 11 jumelés est articulé à ses extrémités par des liaisons articulées 30 qui donnent trois degrés de liberté (trois rotations possibles à chaque extrémité), dont φ₄ rotation d'axe perpendiculaire au plan X₁ Y₁. Cet organe de liaison déformable 20 permet les mouvements radiaux et axiaux des pignons moteurs 10 et de la couronne dentée 1 par rapport au référentiel (schéma 8c).

Le degré de liberté φ₂ rotation propre du pignon moteur 10 est en relation cinématique avec φ₁ rotation propre de la couronne dentée 1 par la conjugaison des dentures.

Ce degré de liberté associé aux autres degrés de liberté définis précédemment assure une position optimale de la denture du pignon moteur 10 correspondant par rapport à la denture de la couronne dentée 1 quelle que soit la position de celle-ci par rapport au référentiel.

Chaque pignon moteur 10 et son carter 11 suivent la couronne dentée 1 dans ses mouvements parasites au cours du fonctionnement suivant les trois directions d'axe du référentiel.

On obtient ainsi un alignement systématique des dentures répartissant les pressions de contact sur toute la largeur de la denture et éliminant les défauts pouvant conduire à des avaries sur les flancs des dentures et à terme un arrêt accidentel de l'installation.

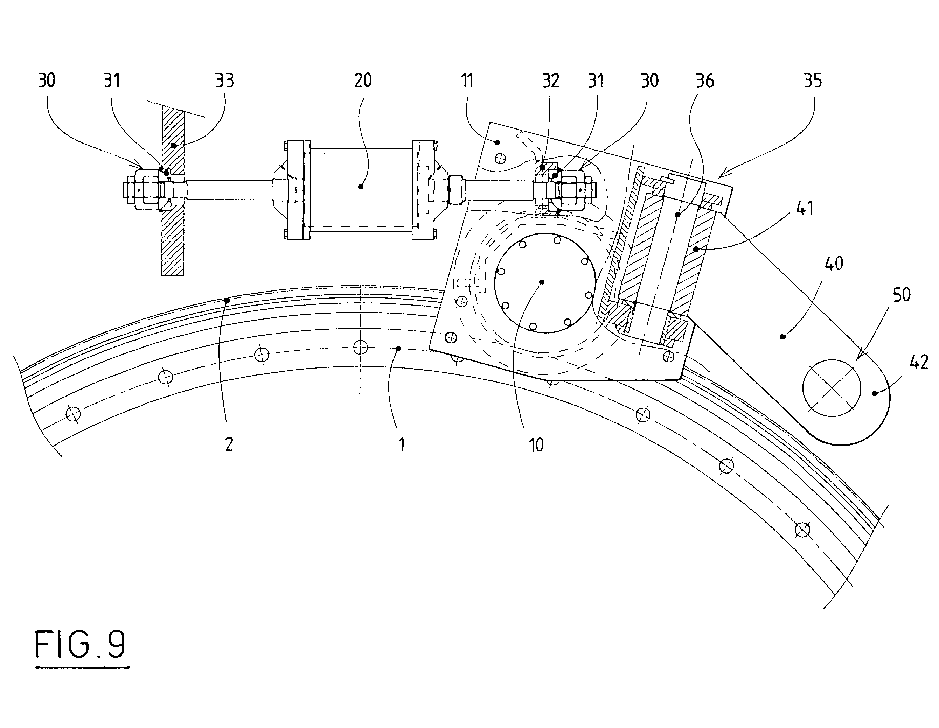

Selon une autre variante représentée à la Fig. 9, un groupe A du dispositif d'entrainement en rotation de la couronne dentée 1 comporte un pignon moteur 10. Le carter 11 de ce pignon moteur 10 est relié à un chassis fixe 4 au moyen d'une barre de liaison 40. Cette barre de liaison 40 est reliée au carter 11 par une liaison articulée 35 et au chassis fixe 4 par une liaison articulée 50.

Par ailleurs, le carter 11 est relié à un palier fixe 33 au moyen d'un organe de liaison déformable 20. Cet organe de liaison déformable 20 est relié au carter 11 et au palier fixe 33 par des liaisons articulées 30 à au moins trois degrés de liberté. Ce palier fixe 33 est solidaire des chassis fixes ou fondations de l'installation.

Le dispositif d'entraînement selon l'invention accepte si nécessaire une déformation angulaire de la machine à entraîner suivant une rotation d'axe Y₁, cette déformation angulaire se combinant alors avec θ₁.

La précontrainte exercée par les organes de liaison déformable 20 donne une pression de contact adéquate des galets 12 sur les pistes extérieures 3 de la couronne dentée 1, qui élimine les effets dynamiques perturbateurs, en particulier lors des faibles couples d'entrainement ou encore lors des phases transitoires de fonctionnement comme par exemple à l'accélération et à la décélération des masses.

D'autre part, l'auto-alignement des dentures est réalisé malgré les déformations et les déplacements possibles de la machine entrainée et de sa couronne dentée 1 qui lui est solidaire, éliminant ainsi les pressions de contacts localisés et les défauts pouvant conduire à des avaries sur les flancs de dentures.

Le dispositif d'entrainement selon l'invention est fonctionnel quelle que soit l'orientation de l'axe de la machine à entrainer : verticale, horizontale ou quelconque et le nombre nécessaire de bâtis fixes 4 réduit et simplifie le raccordement de la transmission au reste de l'installation.

Le dispositif d'entraînement selon l'invention présente l'avantage de fournir une transmission à engrenages compacte, fonctionnant dans les deux sens de rotation ou dans les deux sens du couple et permettant une grande réduction de vitesse, avec la transmission d'un couple élevé tout en éliminant les implantations des carters au sol ou en les réduisant à de simples points d'ancrage.

Les avantages sont d'une part de libérer l'environnement immédiat de la machine à entraîner et d'apporter de ce fait une simplification des montages, des réglages et de la mise en oeuvre des implantations du mécanisme d'entraînement sur les structures fixes de l'installation.

## Revendications

1. Dispositif d'entraînement en rotation d'une couronne dentée (1) de grand diamètre montée sur un arbre ou un tube, du type comprenant :
- plusieurs pignons moteurs (10) destinés à entraîner la couronne dentée (1) répartis autour de ladite couronne dentée (1) et reliés à des moyens (47) d'entraînement en rotation,
- chaque pignon moteur (10) est monté dans un carter (11) comportant au moins deux galets (12) concentriques au pignon moteur (10) et destinés à rouler sur deux pistes extérieures (3), latérales à ladite couronne dentée,
- les pignons moteurs (10) sont répartis en un groupe (A) ou en plusieurs groupe (A) de deux pignons moteurs (10),
- ledit groupe (A) ou chaque groupe (A) desdits plusieurs groupes (A) forme une chaîne cinématique dont les deux carters (11) sont reliés entre eux par un organe de liaison déformable (20), et dont un carter (11) d'extrémité des deux carters est relié à un point fixe d'un châssis fixe (4) par une barre de liaison (40), et l'autre carter (11) d'extrémité des deux carters est relié à un autre point fixe dudit châssis fixe (4) par un moyen de liaison (40),
caractérisé en ce que ledit autre carter (11) d'extrémité des deux carters est relié audit autre point fixe dudit châssis fixe (4) par une barre de liaison (40), et ledit organe ou lesdits organes de liaison déformable (20) et les barres de liaison (40) dudit groupe (A) ou de chaque groupe (A) sont reliés aux carters (11) des pignons moteurs (10) et aux points fixes dudit châssis fixe (4) correspondant par des liaisons articulées (30, 35, 50) assurant un auto-alignement des axes des pignons moteurs (10) avec l'axe de la couronne dentée (1) selon les trois directions d'axe (X, Y, Z).

2. Dispositif selon la revendication 1, caractérisé en ce que les liaisons articulées entre les barres de liaison (40) et les châssis fixes (4) sont formées chacune par une articulation (50) à au moins trois degrés de liberté.

3. Dispositif selon la revendication 1, caractérisé en ce que les liaisons articulées entre les organes de liaison déformable (20) et les carters (11) des pignons moteurs (10) sont formées chacune par une articulation (30) à au moins trois degrés de liberté.

4. Dispositif selon les revendications 2 et 3, caractérisé en ce que chaque articulation (30, 50) à au moins trois degrés de liberté est formée par une articulation sphérique.

5. Dispositif selon les revendications 2 et 3, caractérisé en ce que chaque articulation (30, 50) à au moins trois degrés de liberté est formée par un cardan.

6. Dispositif selon la revendication 1, caractérisé en ce que les liaisons articulées entre les barres de liaison (40) et les carters (11) d'extrémité de chaque groupe (A) de pignons moteurs (10) sont formées chacune par une articulation (35) à un degré de liberté.

7. Dispositif selon la revendication 6, caractérisé en ce que chaque articulation (35) à un degré de liberté est formée par une articulation de type rotoïde.

8. Dispositif selon la revendication 1, caractérisé en ce que chaque organe de liaison déformable (20) comprend un tirant (21) formé de deux parties, respectivement (21a, 21b), une extrémité (210a) de la première partie (21a) étant reliée par une liaison articulée (30) à un premier carter d'extrémité (11) d'un groupe (A) de pignons moteurs (10) et une extrémité (210b) de la seconde partie (21b) étant reliée par une liaison articulée (30) à un second carter (11) d'extrémité du même groupe (A) de pignons moteurs (10), les extrémités (211a, 211b) en vis à vis des deux parties (21a, 21b) du tirant (21) étant reliées entres elles par un élément élastique (22) exerçant sur lesdits carters (11) deux forces de direction opposée et colinéaires pour provoquer le pivotement desdits carters (11) en direction de l'axe de la couronne dentée (1).

9. Dispositif selon la revendication 8, caractérisé en ce que l'élément élastique est formé par un manchon (22) disposé autour de la première partie (21a) du tirant (21) et comprenant un empilement de rondelles élastiques (23), comprimées et dont une paroi (22a) d'extrémité est en appui sur un épaulement (24) ménagé sur l'extrémité (211a) de la première partie (21a) du tirant (21) opposée à celle (210a) reliée à un premier carter (11) d'extrémité du groupe (A) de pignons moteurs (10) et dont l'autre paroi (22b) d'extrémité est en appui sur une première extrémité (26) d'une enveloppe (27) concentrique audit manchon (22) et montée coulissante sur la première partie (21a) du tirant (21), la seconde extrémité (28) de ladite enveloppe (27) étant reliée à la seconde partie (21b) du tirant (21).

10. Dispositif selon la revendication 8, caractérisé en ce que l'élément élastique (22) est formé par au moins un ressort.

11. Dispositif selon la revendication 8, caractérisé en ce que l'élément élastique (22) est formé par un vérin hydraulique.

12. Dispositif selon la revendication 1, caractérisé en ce que l'entraxe entre les liaisons articulées (30) des carters (11) d'extrémité d'un même groupe (A) de pignons moteurs (10) est réglable.

13. Dispositif selon la revendication 1, caractérisé en ce que chaque barre de liaison (40) est formée par une barre rigide.

14. Dispositif selon la revendication 1, caractérisé en ce que chaque barre de liaison (40) est formée par une barre déformable.

15. Dispositif selon la revendication 1, caractérisé en ce que chaque barre de liaison (40) est formée par un organe hydraulique réglable ou non.

16. Dispositif selon la revendication 1, caractérisé en ce que chaque barre de liaison (40) est formée par un organe amortisseur réglable ou non.

17. Dispositif selon la revendication 1, caractérisé en ce que les châssis fixes (4) reliés par les barres de liaison (40) à un carter (11) d'extrémité de chaque groupe (A) de pignons moteurs (10) sont formés par un bâti (4a, 4b) de support de l'arbre ou du tube entraîné par ladite couronne dentée (1).

18. Dispositif selon la revendication 1, caractérisé en ce que les chassis fixes (4) reliés par les barres de liaison (40) à un carter (11) d'extrémité de chaque groupe (A) de pignons moteurs (10) sont formés par un bâti fixe (4) indépendant.

19. Dispositif selon la revendication 1, caractérisé en ce qu'au moins un groupe (A) comporte un pignon moteur (10) dont le carter (11) est relié par l'organe de liaison déformable (20) à un palier fixe (33) au moyen d'une articulation (30) à au moins trois degrés de liberté.

## Patentansprüche

1. Drehantrieb für ein auf einer Welle oder auf einem Rohr montiertes Zahnrad (1) mit großem Durchmesser, dessen Typ folgendes umfaßt:
- mehrere Antriebsritzel (10), die das Zahnrad (1) antreiben sollen und um das Zahnrad (1) herum verteilt und mit Drehantriebsmitteln (47) verbunden sind,
- jedes Antriebsritzel (10) ist in ein Gehäuse (11) eingebaut, das mindestens zwei zum Antriebsritzel (10) konzentrische Rollen (12) beinhaltet, die dazu bestimmt sind, auf zwei seitlich am Zahnrad befindlichen Außenbahnen (3) zu rollen,
- die Antriebsritzel (10) sind in eine Gruppe (A) oder in mehrere Gruppen (A) von je zwei Antriebsritzeln (10) aufgeteilt,
- die Gruppe (A) bzw. jede Gruppe (A) der verschiedenen Gruppen (A) bildet eine kinematische Kette, deren beide Gehause (11) untereinander durch ein verformbares Verbindungsorgan (20) verbunden sind und deren eines Endgehause (11) der beiden Gehäuse mit einem Festpunkt eines festen Rahmens (4) durch eine Verbindungsstange (40) verbunden ist, und deren anderes Endgehäuse (11) der beiden Gehäuse mit einem anderen Festpunkt des festen Gehäuses (4) durch ein Verbindungsmittel (40) verbunden ist,
dadurch gekennzeichnet, daß das andere Endgehäuse (11) der beiden Gehäuse mit dem anderen Festpunkt des festen Gehäuses (4) durch eine Verbindungsstange (40) verbunden ist, und daß das verformbare Verbindungsorgan bzw. die verformbaren Verbindungsorgane (20) und die Verbindungsstangen (40) der Gruppe (A) bzw. jeder Gruppe (A) mit den Gehäuse (11) der Antriebsritzel (10) und den Festpunkten des entsprechenden festen Rahmens (4) durch Gelenkverbindungen (30, 35, 50) verbunden sind, die eine Selbstausrichtung der Achsen der Antriebsritzel (10) auf die Achse des Zahnrades (1) entsprechend den drei Achsrichtungen (X, Y, Z) gewährleisten.

2. Antrieb gemäß Anspruch 1, dadurch gekennzeichnet, daß die Gelenkverbindungen zwischen den Verbindungsstangen (40) und den festen Rahmen (4) aus je einem Gelenk (50) mit mindestens drei Freiheitsgraden bestehen.

3. Antrieb gemäß Anspruch 1, dadurch gekennzeichnet, daß die Gelenk verbindungen zwischen den verformbaren Verbindungsorganen (20) und den Gehäusen (11) der Antriebsritzel (10) aus je einem Gelenk (30) mit mindestens drei Freiheitsgraden bestehen.

4. Antrieb gemäß Anspruch 2 und 3, dadurch gekennzeichnet, daß jedes Gelenk (30, 50) mit mindestens drei Freiheitsgraden aus einem Kugelgelenk besteht.

5. Antrieb gemäß Anspruch 2 und 3, dadurch gekennzeichnet, daß jedes Gelenk (30, 50) mit mindestens drei Freiheitsgraden aus einem Kardangelenk besteht.

6. Antrieb gemäß Anspruch 1, dadurch gekennzeichnet, daß die Gelenkverbindungen zwischen den Verbindungsstangen (40) und den Endgehäusen (11) jeder Gruppe (A) von Antriebsritzeln (10) jeweils aus einem Gelenk (35) mit einem Freiheitsgrad bestehen.

7. Antrieb gemäß Anspruch 6, dadurch gekennzeichnet, daß jedes Gelenk (35) mit einem Freiheitsgrad aus einem Drehgelenk besteht.

8. Antrieb gemäß Anspruch 1, dadurch gekennzeichnet, daß jedes verformbare Verbindungsorgan (20) eine aus zwei Teilen (21a, 21b) bestehende Stange (21) beinhaltet, wobei ein Ende (210a) des ersten Teils (21a) durch eine Gelenkverbindung (30) mit einem ersten Endgehäuse (11) einer Gruppe (A) von Antriebsritzeln (10) verbunden ist und ein Ende (210b) des zweiten Teils (21b) durch eine Gelenkverbindung (30) mit einem zweiten Endgehäuse (11) der selben Gruppe (A) von Antriebsritzeln (10) verbunden ist, wobei die den beiden Tellen (21a, 21b) der Stange (21) gegenüberliegenden Enden (211a, 211b) untereinander durch ein elastisches Element (22) verbunden sind, das auf die Gehäuse (11) zwei entgegengerichtete kolineare Kräfte ausübt, um eine Schwenkung der Gehäuse (11) in Achsrichtung des Zahnrades (1) zu bewirken.

9. Antrieb gemäß Anspruch 8, dadurch gekennzeichnet, daß des elastiche Element aus einer Manschette (22) besteht, die um den ersten Teil (21a) der Stange (21) herum angeordnet ist und einem Stapel komprimierter Federscheiben (23) beinhaltet, deren eine Abschlußwand (22a) an einer Schulter (24) anliegt, die an dem Ende (211a) des ersten Teils (21a) der Stange (21) angebracht ist, das dem mit einem ersten Endgehäuse (11) der Gruppe (A) von Antriebsritzeln (10) verbundenen Ende (210a) gegenüberliegt, und deren andere Abschlußwand (22b) an einem ersten Ende (26) einer zu der Manschette (22) konzentrischen Hülle (27) anliegt und beweglich auf den ersten Teil (21a) der Stange (21) montiert ist, wobei das zweite Ende (28) der Holle (27) mit dem zweiten Teil (21b) der Stange (21) verbunden ist.

10. Antrieb gemäß Anspruch 8, dadurch gekennzeichnet, daß das elastische Element (22) aus mindestens einer Feder besteht.

11. Antrieb gemäß Anspruch 8, dadurch gekennzeichnet, daß das elastische Element (22) aus einem hydraulischen Zylinder besteht.

12. Antrieb gemäß Anspruch 1, dadurch gekennzeichnet, daß der Mittenabstand zwischen den Gelenkverbindungen (30) der Endgehäuse (11) einer gleichen Gruppe (A) von Antriebsritzeln (10) einstelltbar ist.

13. Antrieb gemäß Anspruch 1, dadurch gekennzeichnet, daß jede Verbindungsstange (40) aus einer starren Stange besteht.

14. Antrieb gemäß Anspruch 1, dadurch gekennzeichnet, daß jede Verbindungsstange (40) aus einer verformbaren Stange besteht.

15. Antrieb gemäß Anspruch 1, dadurch gekennzeichnet, daß jede Verbindungsstange (40) aus einem einstellbaren oder nicht einstellbaren hydraulischen Organ besteht.

16. Antrieb gemäß Anspruch 1, dadurch gekennzeichnet, daß jede Verbindungsstange (40) aus einem einstellbaren oder nicht einstellbaren Dämpfungsorgan besteht.

17. Antrieb gemäß Anspruch 1, dadurch gekennzeichnet, daß die festen Rahmen (4), die durch die Verbindungsstangen (40) mit einem Endgehäuse (11) einer jeden Gruppe (A) von Antriebsritzeln (10) verbunden sind, aus einem Trägergestell (4a, 4b) für die von dem Zahnrad (1) angetriebene Welle bzw. Rohr bestehen.

18. Antrieb gemäß Anspruch 1, dadurch gekennzeichnet, daß die festen Rahmen (4), die durch die Verbindungsstangen (40) mit einem Endgehäuse (11) einer jeden Gruppe (A) von Antriebsritzeln (10) verbunden sind, aus einem unabhängigen festen Gestell (4) bestehen.

19. Antrieb gemäß Anspruch 1, dadurch gekennzeichnet, daß mindestens eine Gruppe (A) ein Antriebsritzel (10) hat, dessen Gehäuse (11) durch das verformbare Verbindungsorgan (20) mit einem festen Lager (33) mittels eines Gelenks (30) mit mindestens drei Freiheitsgraden verbunden ist.

## Claims

1. Device for rotating a large-diameter annulus gear (1) mounted on a shaft or a tube, of the type comprising:
- several driving pinions (10) intended to drive the annulus gear (1) and distributed around the said annulus gear (1) and connected to rotational-drive means (47),
- each driving pinion (10) is mounted in a casing (11) comprising at least two rollers (12) which are concentric with the driving pinion (10) and intended to run along two external tracks (3) which are lateral to the said annulus gear,
- the driving pinions (10) are distributed in one group (A) or in several groups (A) of two driving pinions (10),
- the said group (A) or each group (A) of the said several groups (A) forms a kinematic sequence, in which the two casings (11) are connected together by a deformable connecting member (20), and in which one end casing (11) of the two casings is connected to a fixed point of a fixed chassis (4) by a connecting bar (40), and the other end casing (11) of the two casings is connected to another fixed point of the said fixed chassis (4) by a connecting means (40),
characterized in that the said other end casing (11) of the two casings is connected to the said other fixed point of the said fixed chassis (4) by a connecting bar (40), and the said deformable connecting member or members (20) and the connecting bars (40) of the said group (A) or of each group (A) are connected to the casings (11) of the driving pinions (10) and to the fixed points of the said corresponding fixed chassis (4) by articulated connections (30, 35, 50) that allow the axes of the driving pinions (10) to self-align with the axis of the annulus gear (1) in the three axis directions (X, Y, Z).

2. Device according to Claim 1, characterized in that the articulated connections between the connecting bars (40) and the fixed chassis (4) are each formed by an articulation (50) that has at least three degrees of freedom.

3. Device according to Claim 1, characterized in that the articulated connections between the deformable connecting members (20) and the casings (11) of the driving pinions (10) are each formed by an articulation (30) that has at least three degrees of freedom.

4. Device according to Claims 2 and 3, characterized in that each articulation (30, 50) with at least three degrees of freedom is formed by a ball and socket joint.

5. Device according to Claims 2 and 3, characterized in that each articulation (30, 50) with at least three degrees of freedom is formed by a cardan joint.

6. Device according to Claim 1, characterized in that the articulated connections between the connecting bars (40) and the end casings (11) of each group (A) of driving pinions (10) are each formed by an articulation (35) that has one degree of freedom.

7. Device according to Claim 6, characterized in that each articulation (35) with one degree of freedom is formed of an articulation of the rotoid type.

8. Device according to Claim 1, characterized in that each deformable connecting member (20) comprises a tie bar (21) formed of two parts (21a, 21b respectively), one end (210a) of the first part (21a) being connected by an articulated connection (30) to a first end casing (11) of one group (A) of driving pinions (10), and one end (210b) of the second part (21b) being connected by an articulated connection (30) to a second end casing (11) of the same group (A) of driving pinions (10), the ends (211a, 211b) facing each other of the two parts (21a, 21b) of the tie bar (21) being joined together by an elastic element (22) which exerts on the said casings (11) two collinear forces in opposite directions that cause the said casings (11) to pivot in the direction of the axis of the annulus gear (1).

9. Device according to Claim 8, characterized in that the elastic element is formed by a sleeve (22) arranged around the first part (21a) of the tie bar (21) and comprising a stack of compressed elastic washers (23), and an end wall (22a) of which rests on a shoulder (24) formed on the end (211a) of the first part (21a) of the tie bar (21) which is the opposite end to the one (210a) that is connected to a first end casing (11) of the group (A) of driving pinions (10), and the other end wall (22b) of which rests on a first end (26) of an outer casing (27) which is concentric with the said sleeve (22) and mounted so that it can slide over the first part (21a) of the tie bar (21), the second end (28) of the said outer casing (27) being connected to the second part (21b) of the tie bar (21).

10. Device according to Claim 8, characterized in that the elastic element (22) is formed of at least one spring.

11. Device according to Claim 8, characterized in that the elastic element (22) is formed of a hydraulic ram.

12. Device according to Claim 1, characterized in that the distance between centres of the articulated connections (30) of the end casings (11) of one same group (A) of driving pinions (10) is adjustable.

13. Device according to Claim 1, characterized in that each connecting bar (40) is formed of a rigid bar.

14. Device according to Claim 1, characterized in that each connecting bar (40) is formed of a deformable bar.

15. Device according to Claim 1, characterized in that each connecting bar (40) is formed of an adjustable or non-adjustable hydraulic member.

16. Device according to Claim 1, characterized in that each connecting bar (40) is formed of an adjustable or non-adjustable damper member.

17. Device according to claim 1, characterized in that the fixed chassis (4) connected by the connecting bars (40) to an end casing (11) of each group (A) of driving pinions (10) are formed by a bed (4a, 4b) that supports the shaft or tube driven by the said annulus gear (1).

18. Device according to Claim 1, characterized in that the fixed chassis (4) connected by the connecting bars (40) to an end casing (11) of each group (A) of driving pinions (10) are formed by an independent fixed bed (4).

19. Device according to Claim 1, characterized in that at least one group (A) comprises a driving pinion (10), the casing (11) of which is connected by the deformable connecting member (20) to a fixed bearing (33) by means of an articulation (30) that has at least three degrees of freedom.
